# EUROPEAN PATENT APPLICATION

(11) **EP 1 598 181 A1**
(43) Date of publication of application: **23.11.2005**
(21) Application number: 04708867.9
(22) Date of filing: 06.02.2004
(51) Int. Cl.: B32B 27/36

(54) **POLYLACTIC ACID MULTI-LAYER FILM AND PROCESS FOR FORMATION THEREOF**

(30) Priority: 10.02.2003 JP 2003032684
(71) Applicant: TAMAPOLY CO., LTD., Tokyo 171-0022 (JP)
(72) Inventor: NAKAMURA, Taro, C/O Tamapoly Co., Ltd., Tokyo 171-0022 (JP); IWAZAKI, Katsunori, C/O Tamapoly Co., Ltd., Tokyo 171-0022 (JP); KATO, Masaru, C/O Tamapoly Co., Ltd., Tokyo 171-0022 (JP); MARUYAMA, Isao,C/O Tamapoly Co., Ltd., Tokyo 171-0022 (JP)
(74) Representative: HOFFMANN EITLE
(86) International application number: PCT/JP2004/001236
(87) International publication number: WO 2004/069535

(57) **Abstract**

A polylactic acid (PLA) multi-layer film is produced by arranging a flexible biodegradable polyester resin having a modulus of elasticity of 50 to 1,000 MPa between two kinds of polylactic acids and co-extruding the three through a die. The multi-layer film of the invention is constituted of an interlayer of a biodegradable polyester resin, which is opaque and has blocking tendency though it is very flexible, and transparent and hard PLA layers between which the interlayer is sandwiched, so that the multi-layer film is improved in wrinkle, surface waviness, and elongation and impact resistance of film - in which a film made of PLA alone is problematic - by virtue of the presence of the biodegradable polyester resin layer, and in transparency and blocking resistance - in which a film of a biodegradable polyester resin alone is problematic - by virtue of the PLA layers.

## Description

### TECHNICAL FIELD

This invention relates to a polylactic acid (hereinafter abbreviated as PLA)-based multilayer film and a method of producing the same and, more particularly, to a PLA-based multilayer film which is transparent and improved in blocking resistance, low temperature sealability and film impact strength and can be produced without causing the crease and surface waviness problems encountered in film molding in the prior art due to the important fact that non-oriented PLA films are stiff and nonstretchable, and to a method of producing the same.

### BACKGROUND ART

PLA is a biodegradable resin derived from the raw material starch, which is produced by photosynthesis from carbon dioxide and water. The quantity of heat generated upon combustion of PLA is small and, moreover, PLA is spontaneously hydrolyzed in the ground or in water and then degraded by microorganisms to give harmless degradation products. Therefore, it is said to be the most promising biodegradable and environment-friendly resin. In addition, it is the only biodegradable resin so far approved by the United States Food and Drug Administration (FDA) for food contact use.

However, those grades of PLA which are generally on the market have a melting point of about 165-175°C and, since the melting point is high, it is necessary to raise the film molding temperature to 200°C or above; the cylindrical resin (bubble) extruded from the inflation molding die is subject to fluctuations, making it difficult to carry out the molding in a stable manner. PLA films biaxially (namely lengthwise and widthwise) oriented after sheet molding by the T die technique are already on the market. However, such biaxially oriented PLA films are lacking in low temperature sealability, hence cannot be heat-sealed by the conventional techniques other than fusion cut sealing. Thus, the advent of PLA-derived biodegradable sealant films having transparency and an adequate level of stiffness has been awaited.

Meanwhile, when PLA is produced by copolymerization of L-lactic acid and D-lactic acid, the melting point thereof lowers with the proportion of D-lactic acid subjected to copolymerization, so that the molding temperature can be lowered to 200°C or below. For improving the low temperature sealability, it is therefore advantageous to copolymerize L-lactic acid with D-lactic acid. Since the melting point lowers, the molding temperature can be lowered accordingly and, in the case of film molding by the inflation technique, in particular, the melt tension becomes high and, favorably, the bubble is more stabilized.

In cases where PLA is used singly, however, even if the melting point of PLA is lowered to 160°C by copolymerizing L-lactic acid with D-lactic acid, the elasticity modulus remains at a very high level, namely about 3,000 MPa, although the bubble is more stabilized; the film is still stiff and almost nonstretchable, the elongation being about 5%. As a result, in film molding by the inflation technique, in particular, creasing and surface waviness occur and it is still impossible to stably produce films of commercial value. In this manner, the crease and surface waviness problems cannot be solved by modifying the molding conditions alone; in addition, the films are not stretchable, hence are low in film impact strength. In thin film molding, film breaking tends to occur.

On the other hand, Japanese Kokai Publication No. H09-157408 discloses, as a PLA film excellent in slip characteristics, heat sealability and fusion cut sealing performance and endowed with heat stability, an oriented polylactic acid film mainly composed of a polylactic acid polymer with an L-lactic acid to D-lactic acid ratio of 100:0 to 94:6 or 6:94 to 0:100 and a biodegradable aliphatic polyester having a glass transition point Tg of not higher than 0°C (the content of the biodegradable aliphatic polyester being 3-70 parts by mass per 100 parts by mass of the polylactic acid polymer) and oriented at least uniaxially and then heat-treated.

To solve the problems caused by the excessive stiffness of the PLA films, the present inventors attempted the modification by blending with a biodegradable polyester which has an elasticity modulus of 70 MPa, hence is very soft. The PLA film then becomes soft and flexible with the increase in blending proportion. However, even at a blending level of 40%, the improvements from the crease and surface waviness viewpoint were unsatisfactory. Further, the elongation of the film was limited in extent and, at a blending level of 20%, the film impact strength was 10 J/cm, hence the extent of improvement in this respect was slight and, moreover, at a blending level as high as 40%, marked deteriorations in transparency and blocking resistance resulted, making it impossible to obtain films of high commercial value. There is another problem that films comprising a biodegradable polyester as a blending polymer cannot pass the examination by the FDA, hence cannot be used in contact with food.

On the other hand, it was confirmed that a biodegradable polyester, when used alone, is flexible and very satisfactory in film elongation and film impact strength, although it is very poor in transparency and blocking resistance and has no film stiffness, hence it has low commercial value as a film. It could also be confirmed that the cause of the poor transparency is the surface roughness of the biodegradable polyester film and that the inside haze is good.

As discussed hereinabove, the prior art non-oriented PLA films need improvements in a number of respects for the practical use thereof. Accordingly, it is an object of the present invention to provide a film excellent in transparency, blocking resistance, film elongation and film impact strength, with PLA forming the surfaces without causing creasing or surface waviness.

### DISCLOSURE OF THE INVENTION

As a result of various experiments in an attempt to solve such problems with PLA as mentioned above, the present inventors judged that when a two-resin three-layer or three-resin three-layer film is produced using, for forming the intermediate layer, a biodegradable polyester which contains ester groups, like PLA, the weak points of the single use of PLA, namely creasing, surface waviness and unsatisfactory film elongation and film impact strength, can be overcome and, conversely, the weak points of the single use of the biodegradable polyester, namely poor transparency and blocking resistance, can be overcome by sandwiching between two PLA layers. Thus, they have now completed the present invention in the manner of counterintuitive thinking.

In a first mode of embodiment of the present invention, there is provided a PLA-based multilayer film characterized in that a flexible biodegradable polyester resin layer with an elasticity modulus of 50-1,000 MPa is disposed between two PLA layers. Thus, when the biodegradable polyester resin layer which is very flexible but is opaque and has a blocking tendency is used as the intermediate layer and that layer is sandwiched between the transparent and stiff PLA layers, the disadvantages of the single use of PLA, namely creasing, surface waviness, and unsatisfactory film elongation and film impact strength, are overcome owing to the presence of the biodegradable polyester resin layer and the disadvantages of the single use of the biodegradable polyester resin layer, namely poor transparency and blocking tendency, are overcome by sandwiching between the PLA layers and, thus, a PLA-based multilayer film showing markedly improved film elongation and having good transparency and blocking resistance can be obtained without occurrence of creasing or surface waviness.

In such a mode, the two polylactic acid films are preferably made of the same polylactic acid species or respectively made of different polylactic acid species. The nature of each polylactic acid species is determined by the proportions of D-lactic acid and L-lactic acid in the polymer, the molecular weight and the melting point, among others. Such a constitution gives a two-resin three-layer PLA-based multilayer film both sides of which are the same in composition or a three-resin three-layer PLA-based multilayer film both sides of which are different in composition and, in this manner, various PLA-based multilayer films can be obtained.

Further, in such a mode, the two PLA films each is preferably made of a copolymer of L-lactic acid and D-lactic acid with a melting point of not higher than 160°C. Such mode of embodiment makes it possible to lower the heating temperature in the production process in proportion to the low melting point of PLA; the low temperature heat sealability also becomes good. A more preferred copolymer of L-lactic acid and D-lactic acid has a melting point of 110-140°C. It is difficult to obtain PLA species lower in melting point than 110°C, and PLA species higher in melting point than 160°C are undesirable since they require a higher heating temperature in the step of molding, which makes the bubble unstable.

Further, in such a mode, the biodegradable polyester resin layer is preferably made of an aliphatic polyester or aliphatic-aromatic copolyester having a melting point of 90-150°C. Suited for use as the biodegradable aliphatic polyester are, for example, Showa Highpolymer's Bionolle PBSA #3001 (elasticity modulus: 350 MPa; melting point: 95°C) and PBS #1903 (elasticity modulus: 700 MPa; melting point 115°C). Suited for use as the biodegradable aliphatic-aromatic copolyester is, for example, BASF's Ecoflex FBX 7011 (elasticity modulus: 70 MPa; melting point 110°C). Those having a melting point lower than 90°C may possibly be melted on the occasion of use, hence are undesirable, whereas those having a melting point higher than 150°C are also undesirable since they make the drawbacks of PLA films prominent.

Further, in such a mode, a nucleating agent, in an amount of 0.05% by mass to 1.5% by mass, is preferably added to the biodegradable polyester resin layer. The addition of such a nucleating agent to the biodegradable polyester resin layer improves the rate of crystallization in the biodegradable polyester resin layer, so that the PLA-based multilayer film obtained can have increased transparency. In this case, nucleating agent addition levels below 0.05% by mass are undesirable since the addition of the nucleating agent will not produce any substantial effect. At addition levels exceeding 1.5% by mass, no further effects will be produced since the effects of the addition are already at a point of saturation.

Further, in such a mode, the thickness of the biodegradable polyester resin layer is preferably not less than 20% of the total thickness. By employing such a constitution, it becomes possible to improve the film impact strength and creasing and surface waviness features of the PLA-based multilayer film. A thickness proportion of less than 20% is unfavorable since the extent of improvement is slight. The proportion is more preferably not lower than 40%, most preferably not lower than 60%.

In a second mode of embodiment of the invention, there is provided a method of producing polylactic acid-based multilayer films which is characterized in that a flexible biodegradable polyester resin with an elasticity modulus of 50-1,000 MPa is disposed between two PLA layers and the whole is coextruded through a die. By employing such a production method, it becomes possible to produce, with ease, those PLA-based multilayer films which have the properties shown above referring to the first mode of embodiment of the invention and, in addition, the bond strength between the PLA and biodegradable polyester resin is also improved. This indicates that both materials are well compatible with each other, leading to the solution of the surface roughness problem of the biodegradable polyester resin, hence to a marked improvement in transparency.

The two polylactic acid films to be used are preferably the films of the same polylactic acid or of different species of polylactic acid, and it is recommended that a copolymer of L-lactic acid and D-lactic acid with a melting point of not higher than 160°C be used for forming each of the two PLA films.

Further, an aliphatic polyester or aliphatic-aromatic copolyester having a melting point of 90-150°C is preferably used as the biodegradable polyester resin, and it is recommended that the thickness of the biodegradable polyester resin layer be not less than 20% of the total thickness. By employing such a method, it also becomes possible to produce, with ease, those PLA-based multilayer films which have the properties shown above referring to the first mode of embodiment of the invention.

More preferably, a nucleating agent is added, in an amount of 0.5% by mass to 1.5% by mass, to the aliphatic polyester or aliphatic-aromatic copolyester having a melting point of 90°C to 150°C, which is the biodegradable polyester resin, so that the transparency, which may otherwise be deteriorated due to the slow rate of crystallization as possibly resulting under certain molding conditions (screw morphology, cooling rate, molding speed, molding temperature, etc.), may be markedly improved; at the same time, the bubble stability is also improved. In this case, nucleating agent addition levels below 0.05% by mass are undesirable since the addition of the nucleating agent will not produce any substantial effect. At addition levels exceeding 1.5% by mass, no further effects will be produced since the effects of the addition are already at a point of saturation.

Further, the PLA-based multilayer film is preferably molded by the inflation technique or T-die technique. When such a method is employed, it is possible to produce, with ease, those PLA-based multilayer films which are described hereinabove referring to the first mode of embodiment of the invention. The inflation technique, which requires only small equipment and a small initial investment, is preferred to the T-die technique and can be favorably employed in the case of small lot production of a variety of film grades.

With respect to the second mode of embodiment of the invention, the molding temperature is not particularly defined since it may vary depending on the method of molding. In the case of the inflation technique, however, the molding temperature is preferably not higher than 210°C from the bubble stability viewpoint and, more preferably, not higher than 190°C. In the case of the T-die technique, an appropriate temperature is not lower than 200°C but not higher than 250°C.

### BEST MODES FOR CARRYING OUT THE INVENTION

The following working examples and comparative examples illustrate the best modes for carrying out the invention. They are, however, by no means limitative of the scope of the invention.

### (Example 1)

Using a three-resin three-layer inflation molding machine with a die diameter of 150 mm and using BASF's aliphatic-aromatic copolyester Ecoflex (melting point: 114°C; elasticity modulus: 70 MPa; MFR at 190°C: 4) for forming the intermediate layer and Mitsui Chemicals' PLA (melting point: 150°C, elasticity modulus: 2,900 MPa; MFR at 190°C: 3) for forming each of the both outer layers, a multilayer film was molded at a resin temperature of 190°C. On that occasion, silica with an average particle diameter of 3 µm was added to the PLA at an addition level of 0.20% by mass for preventing blocking.

The PLA-based multilayer film obtained had a total thickness of 40 µm (10 µm/20 µm/10 µm). The product width was 440 mm (lay-flat width before trimmer slit: 470 mm), the rate of pulling was 30 m/minute, the air ring was of the Venturi dual lip type for bubble stabilization, and the molding was carried out in a three-stage chamber.

The above-mentioned PLA-based multilayer film was found to be a film improved in blocking resistance, slip and flexibility (elasticity modulus: 1,200 MPa) and showing good transparency (haze: 8%) without any crease or surface waviness. The film elongation (elongation: 300%) and film impact strength (100 J/cm) were good. When Ecoflex was used singly, the film impact strength was as good as 330 J/cm but the film was opaque (haze: 50%) and, even when 1.2% by mass of talc and 0.05% by mass of a lubricant were added, the slip characteristics were poor and blocking occurred.

### (Comparative Example 1)

A one-resin three-layer film was produced using PLA for intermediate layer formation as well. The film was stiff (elasticity modulus: 2,900 MPa) and, in spite of various modifications of the air ring conditions and/or nip roll height, creasing and surface waviness occurred. Any film of commercial value was not obtained. There were problems from the continuous production viewpoint as well; the film was not stretchable (elongation: 5%), hence the edges of the film were easily broken; the film impact strength was also low (10 J/cm).

### (Comparative Example 2)

A PLA species with a melting point of 130°C and a MFR at 190°C of 3 was molded at a resin temperature of 170°C using a single layer inflation molding machine with a screw diameter of 50 mm Ø. In spite of various modifications of the molding conditions, in particular the air ring conditions, nip roll height and blow-up ratio, the film slightly pulsated; any satisfactory film showing neither creasing nor surface waviness could not be obtained. When 0.25% by mass of silica was added, a transparent film was obtained without any tendency toward blocking. However, the elongation of the film was as small as 5%, and the film impact strength was also as low as 15 J/cm; these were at those levels which may cause problems from the practical viewpoint.

### (Example 2)

A multilayer film was molded in the same manner as in Example 1 except that the low melting grade of PLA as used in Comparative Example 2 was in lieu of the PLA in Example 1, that the resin temperature was lowered to 170°C and that the thickness proportion of the special polyester resin was increased, namely the layer thickness ratio was 8 µm/24 µm/8 µm, with the total thickness being 40 µm. By the effect of the lowered resin temperature, the bubble stability was more improved than in Example 1, and the deviation in sectional thickness was improved from R = 10 µm in Example 1 to R = 6 µm. As for the physical properties, the film obtained was still more improved in low temperature heat sealability, film elongation (elongation: 400%) and film impact strength as compared with the film of Example 1. The heat seal temperature became constant from 110°C (15 N/15 mm), and the film impact strength was 200 J/cm.

### (Example 3)

A multilayer film was molded under the same molding conditions as in Example 2 except that Showa Highpolymer's Bionolle PBSA #1903 (melting point: 115°C; elasticity modulus: 700 MPa; MFR at 190°C: 4.5) was used for forming the intermediate layer. While a film produced using Bionolle #1903 alone was opaque and inferior in commercial value, the film obtained was transparent (haze: 9%) and showed no blocking and was a good film without creasing or surface waviness.

### (Example 4)

Using a large size three-resin three-layer inflation molding machine with a die diameter of 325 mm, a multilayer film was molded at a resin temperature of 190°C using Cargill Dow's PLA (melting point: 125°C; D-form mole fraction: 7%; elasticity modulus: 2,900 MPa; MFR at 190°C: 3) for forming the inner and outer layers and BASF's Ecoflex, the same one as used in Example 1, for forming the intermediate layer. On that occasion, 0.4% by mass of silica with an average particle diameter of 3 µm was added to the PLA for preventing blocking and improving slip characteristics.

The total thickness of the multilayer film obtained was 40 µm (10 µm/20 µm/10 µm). On that occasion, the product width was 800 mm (lay-flat width before trimmer slit: 840 mm), the rate of pulling was 40 m/minute, the air ring used was of the dual lip type, without any chamber, and the bubble inside was cooled.

However, the above multilayer film showed deteriorated transparency (haze: 14%) due to the increase in equipment size and the increase in molding rate, although it was almost equivalent in other physical properties to the film of Example 1.

The cause of this transparency deterioration is the slow rate of crystallization of Ecoflex constituting the intermediate layer. Addition of 0.5% by mass of a nucleating agent resulted in a marked improvement in transparency (haze: 7%) and also in a slight improvement in bubble stability.

The nucleating agent used was PBT (polybutylene terephthalate). The crystallization temperature of Ecoflex as measured by DSC rose from 61°C to 81°C (cooling rate in DSC: 20°C/minute). The nucleating agent is not limited to PBT but may be any of those that can raise the crystallization temperature and increase the rate of crystallization.

As described hereinabove, the present invention has made it possible to produce transparent and well sealable sealant films for biaxially oriented PLA films and thus produce biodegradable bags having good transparency on conventional bag manufacturing machines while the prior art PLA bags can be manufactured only by fusion cut sealing. The films and bags can be used in various fields, for example for food packaging, industrial use, and agricultural use.

The polylactic acid-based multilayer film of the invention can of course be used not only as a sealant film but also as a simple film in various fields.

## Claims

1. A polylactic acid-based multilayer film which comprises two polylactic acid films and a flexible biodegradable polyester resin layer with an elasticity modulus of 50-1,000 MPa as disposed between said two non-oriented polylactic acid films.

2. A polylactic acid-based multilayer film as set forth in Claim 1, wherein said two polylactic acid films are the same or different in polylactic acid species.

3. A polylactic acid-based multilayer film as set forth in Claim 1, **characterized in that** said two polylactic acid films each is a copolymer of L-lactic acid and D-lactic acid with a melting point of not higher than 160°C.

4. A polylactic acid-based multilayer film as set forth in Claim 1, **characterized in that** said biodegradable polyester resin layer is made of an aliphatic polyester or aliphatic-aromatic copolyester having a melting point of 90-150°C.

5. A polylactic acid based multilayer film as set forth in Claim 1, **characterized in that** said biodegradable polyester resin layer contains 0.05% by mass to 1.5% by mass of a nucleating agent as added to the polyester resin.

6. A polylactic acid-based multilayer film as set forth in any of Claims 1-5, wherein the thickness of said biodegradable polyester resin layer is not less than 20% of the total thickness.

7. A method of producing polylactic acid-based multilayer films, **characterized in that** a flexible biodegradable polyester resin with an elasticity modulus of 50-1,000 MPa is disposed between two polylactic acid layers and the whole is coextruded through a die.

8. A method of producing polylactic acid-based multilayer films as set forth in Claim 7, **characterized in that** said two polylactic acid layers are the same or different.

9. A method of producing polylactic acid-based multilayer films as set forth in Claim 7, **characterized in that** said two polylactic acid layers each is a copolymer of L-lactic acid and D-lactic acid with a melting point of not higher than 160°C.

10. A method of producing polylactic acid-based multilayer films as set forth in Claim 7, **characterized in that** an aliphatic polyester or aliphatic-aromatic copolyester having a melting point of 90-150°C is used as said biodegradable polyester resin.

11. A method of producing polylactic acid-based multilayer films as set forth in Claim 7, **characterized in that** 0.05% by mass to 1.5% by mass of a nucleating agent is added to said biodegradable polyester resin layer.

12. A method of producing polylactic acid-based multilayer films as set forth in Claim 7, wherein the thickness of said biodegradable polyester resin layer is not less than 20% of the total thickness.

13. A method of producing polylactic acid-based multilayer films as set forth in any of Claims 7-12, **characterized in that** said non-oriented polylactic acid-based multilayer films are molded by the inflation technique or T die technique.
